# EUROPEAN PATENT SPECIFICATION

(11) **EP 1 968 143 B1**
(45) Date of publication and mention of the grant of the patent: **21.01.2015**
(21) Application number: 06834747.5
(22) Date of filing: 08.12.2006
(51) Int. Cl.: H01M 8/02, H01M 8/10

(54) **PROCESS FOR PRODUCING SEPARATOR MATERIAL FOR POLYMER ELECTROLYTE FUEL CELLS**
PROZESS ZUR HERSTELLUNG EINES SEPARATORENMATERIALS FÜR POLYMER-ELEKTROLYT-BRENNSTOFFZELLEN
PROCÉDÉ DE PRODUCTION POUR UN MATÉRIAU DE SÉPARATEUR POUR PILES À COMBUSTIBLE À ÉLECTROLYTE POLYMÈRE

(30) Priority: 21.12.2005 JP 2005367586
(43) Date of publication of application: 10.09.2008
(73) Proprietor: Tokai Carbon Company, Ltd., Minato-ku, Tokyo 107-8636 (JP)
(72) Inventor: TANIGUCHI, Tatsuo, Tokyo 107-8636 (JP)
(74) Representative: Flaccus, Rolf-Dieter
(86) International application number: PCT/JP2006/325004
(87) International publication number: WO 2007/072745

(56) References cited:
- WO-A1-02/01660
- JP-A- 2000 040 517
- JP-A- 2001 266 912
- JP-A- 2002 083 608
- JP-A- 2003 242 995
- JP-A- 2004 055 375
- JP-A- 2004 119 346
- JP-A- 2004 192 981
- JP-A- 2005 122 974
- JP-A- 2005 339 953
- JP-A- 2006 338 908

## Description

### TECHNICAL FIELD

The present invention relates to a process of producing a separator material for polymer electrolyte fuel cells.

### BACKGROUND ART

A polymer electrolyte fuel cell includes a polymer electrolyte membrane formed of an ion-exchange membrane made of perfluorocarbon sulfonic acid or the like, two electrodes provided on either side of the polymer electrolyte membrane, separators which are provided with gas supply grooves and supply a fuel gas (e.g., hydrogen) or an oxidant gas (e.g., oxygen) to the electrodes, and two current collectors provided outside the separators, and the like.

A separator material is required to exhibit high conductivity in order to reduce the internal resistance of the cell to increase power generation efficiency. The separator material is also required to exhibit high gas impermeability in order to completely separately supply the fuel gas and the oxidant gas to the electrodes. The separator material is further required to exhibit high strength and high corrosion resistance so that breakage does not occur during cell stack assembly and cell operation.

A carbon material has been used as the separator material for which the above properties are required. As the carbon material, a graphite material has low density. A glass-like carbon material is dense and exhibits excellent gas impermeability, but is hard and brittle, resulting in poor processability. Moreover, a glass-like carbon material has low conductivity as compared with a graphite material. Therefore, a carbon and cured resin molded product produced by binding a carbon powder (e.g., graphite) with a thermosetting resin (binder) and molding the resulting product has been utilized as the separator material.

For example, JP-A-8-222241 discloses a method of producing a graphite member for polymer electrolyte fuel cells, wherein a binder is added to a carbonaceous powder having a maximum particle diameter of 125 µm or less, the mixture is heated, mixed, CIP-formed, fired, and graphitized to obtain an isotropic graphite material having an average pore size of 10 µm or less and a porosity of 20% or less, and the isotropic graphite material is impregnated with a thermosetting resin, followed by curing of the thermosetting resin.

JP-A-2000-021421 discloses a method of producing a separator member for polymer electrolyte fuel cells, wherein 15 to 40 wt% of a thermosetting resin having a non-volatile content of 60% or more is added to 60 to 85 wt% of a graphite powder having an average particle diameter of 50 µm or less, a maximum particle diameter of 100 µm or less, and an aspect ratio of 3 or less, the mixture is kneaded under pressure, ground, placed in a mold, de-aerated under reduced pressure, and molded under pressure, and the molded product is processed into a specific shape and then cured at a temperature of 150 to 280°C, or cured at a temperature of 150 to 280°C and then processed into a specific shape.

However, a graphite material tends to have anisotropic physical properties (e.g., electrical resistance (conductivity)). The anisotropy of the graphite material can be reduced to some extent by grinding the raw material graphite. However, the grinding process increases cost to a large extent.

As a means that solves the above-described problem, JP-A-2000-040517 discloses a carbonaceous separator material for polymer electrolyte fuel cells and a method of producing the same. The separator material disclosed in JP-A-2000-040517 is provided with material properties (particularly electrical resistivity) with reduced anisotropy and excellent gas impermeability by utilizing natural graphite and artificial graphite having excellent conductivity in combination and specifying the particle properties, the mixing ratio, and the like.

### DISCLOSURE OF THE INVENTION

According to the separator material and the method of producing the same disclosed in JP-A-2000-040517, since a graphite powder having a small particle diameter (particularly a fine natural graphite powder) is required as the raw material, cost increases to a large extent due to a grinding process. The inventor of the present invention conducted tests and studies based on the technology disclosed in JP-A-2000-040517 in order to reduce cost. As a result, the inventor found that a separator material can be produced at low cost by using a natural graphite powder having a relatively large particle diameter as a raw material graphite powder in combination with artificial graphite, specifying the particle diameter and the mixing ratio, and slurrying a mixture of the graphite powder and a thermosetting resin.

The present invention was conceived based on the above finding. An object of the present invention is to provide an inexpensive separator material which has electrical resistivity with reduced anisotropy, excellent moldability, and excellent gas impermeability and is suitable for polymer electrolyte fuel cells.

A separator material for polymer electrolyte fuel cells produced with the present invention achieves the above object comprises a sheet-shaped graphite and cured resin molded product which includes 100 parts by weight of a graphite powder and 10 to 35 parts by weight of a thermosetting resin, the graphite powder being prepared by mixing an artificial graphite powder having an average particle diameter A of 1 to 15 µm and a natural graphite powder having an average particle diameter B of Ax(2 to 20) µm in a weight ratio of 80:20 to 60:40, the graphite powder being integrally bound with the thermosetting resin, and the separator material having (1) an electrical resistivity of 0.02 Ωcm or less, (2) an electrical resistivity anisotropy ratio (thickness direction/plane direction) of two or less, and (3) a gas permeability of 10⁻⁶ cm³/cm² min or less.

A process of producing a separator material for polymer electrolyte fuel cells according to the present invention comprises mixing 100 parts by weight of a graphite powder prepared by mixing an artificial graphite powder having an average particle diameter A of 1 to 15 µm and a natural graphite powder having an average particle diameter B of A×(2 to 20) µm in a weight ratio of 80:20 to 60:40, 10 to 35 parts by weight of a thermosetting resin, 75 to 200 parts by weight of a dispersion medium, and 0.1 to 10 parts by weight of a dispersant to prepare a slurry, pouring the slurry into a mold, drying the slurry, thermocompression-molding the dried product in the shape of a sheet, and curing the molded product by heating.

Another process of producing a separator material for polymer electrolyte fuel cells according to the present invention comprises mixing 100 parts by weight of a graphite powder prepared by mixing an artificial graphite powder having an average particle diameter A of 1 to 15 µm and a natural graphite powder having an average particle diameter B of A×(2 to 20) µm in a weight ratio of 80:20 to 60:40, 10 to 35 parts by weight of a thermosetting resin, 75 to 200 parts by weight of a dispersion medium, and 0.1 to 10 parts by weight of a dispersant to prepare a slurry, applying the slurry to a substrate sheet, drying the slurry, removing the substrate sheet to obtain a green sheet, stacking a plurality of the green sheets in a mold, thermocompression-molding the green sheets in the shape of a sheet, and curing the molded product by heating.

According to the present invention, since the natural graphite powder having a relatively large particle diameter is used, the cost required for a grinding process can be reduced. This makes it possible to inexpensively provide a separator material for polymer electrolyte fuel cells which has electrical resistivity with reduced anisotropy and excellent gas impermeability and ensures excellent cell performance and a process of producing the same.

### BEST MODE FOR CARRYING OUT THE INVENTION

Natural graphite has a high degree of graphite crystal structure as compared with artificial graphite, and exhibits excellent conductivity and thermal conductivity. On the other hand, natural graphite has a very large property directivity due to its flake-like shape. For example, natural graphite exhibits high conductivity in the plane direction (X-Y direction), and exhibits low conductivity in the thickness direction (Z direction) (i.e., has a high degree of anisotropy). Therefore, it is difficult to utilize a sheet-shaped graphite and cured resin molded product obtained using only natural graphite as a separator material due to anisotropic properties (e.g., conductivity).

The present invention is characterized in that natural graphite is in combination with artificial graphite and the range of the particle diameter of the graphite powder is specified. Specifically, a graphite powder having an average particle diameter A of 1 to 15 µm is used as the artificial graphite powder, and the average particle diameter B of the natural graphite powder used in combination with the artificial graphite powder is specified in the range of Ax(2 to 20) µm.

A graphite powder prepared by mixing the artificial graphite powder and the natural graphite powder in a weight ratio of 80:20 to 60:40 is used as the graphite powder. When mixing a thermosetting resin with the graphite powder, since the natural graphite powder has a particle diameter larger than that of the artificial graphite powder, the natural graphite powder particles mainly come into contact so that openings are formed between the particles. Therefore, the artificial graphite powder having a small particle diameter is present in the graphite/resin mixture in a state in which the artificial graphite powder is held in the openings.

In this case, if the mixing weight ratio of the artificial graphite powder exceeds 80, an effect obtained by the excellent conductivity of the natural graphite powder is reduced. If the mixing weight ratio of the artificial graphite powder is less than 60, the degree of anisotropy in conductivity and the like increases.

In order to allow the artificial graphite powder to be held in the openings formed between the natural graphite powder particles and fixed in random directions, the average particle diameter A of the artificial graphite powder is specified in the range of 1 to 15 µm, and the average particle diameter B of the natural graphite powder is specified in the range of A×(2 to 20) µm. It is preferable that the average particle diameter B of the natural graphite powder be in the range of A×(5 to 15) µm.

If the graphite powder has a large particle diameter, a cell may be contaminated due to removal of the graphite powder or the like when machining the product into the shape of a separator member, or gas impermeability decreases. Therefore, the upper limits of the average particle diameters A and B are set as described above. The artificial graphite powder may be obtained as a cut powder by cutting a graphite material. Since it is inefficient to prepare a fine powder having an average particle diameter of 1 µm or less, the average particle diameter A of the artificial graphite powder is set at 1 µm or more.

The anisotropy in conductivity can be reduced while effectively utilizing the excellent conductivity of the natural graphite by setting the average particle diameter of the natural graphite powder used in combination with the artificial graphite powder at a relatively large value and specifying the mixing weight ratio. This reduces cost required to grind the natural graphite powder, whereby an inexpensive separator material can be provided.

The separator material produced with the present invention includes a sheet-shaped graphite and cured resin molded product which contains 100. parts by weight of a graphite powder prepared by mixing the above-described artificial graphite powder and natural graphite powder in a weight ratio of 80:20 to 60:40 and 10 to 35 parts by weight of a thermosetting resin, the graphite powder being integrally bound with the thermosetting resin. If the amount of the thermosetting resin is less than 10 parts by weight, gas impermeability decreases due to poor moldability. If the amount of the thermosetting resin is more than 35 parts by weight, the function of the separator material becomes insufficient due to decreased conductivity.

The separator material for polymer electrolyte fuel cells produced with the present invention having such a configuration has (1) an electrical resistivity of 0.02 Ωcm or less, (2) an electrical resistivity anisotropy ratio (thickness direction/plane direction) of two or less, and (3) a gas permeability of 10⁻⁶ cm³/cm²·min or less suitable for a separator material.

The process of producing a separator material for polymer electrolyte fuel cells according to the present invention includes mixing 100 parts by weight of a graphite powder prepared by mixing the above-described artificial graphite powder and natural graphite powder in a weight ratio of 80:20 to 60:40, 10 to 35 parts by weight of a thermosetting resin, 75 to 200 parts by weight of a dispersion medium, and 0.1 to 10 parts by weight of a dispersant to prepare a slurry, pouring the slurry into a mold, drying the slurry, thermocompression-molding the dried product in the shape of a sheet, and curing the molded product by heating.

The dispersion medium used when preparing the slurry is not particularly limited insofar as the dispersion medium dissolves the resin. Examples of the dispersion medium include an alcohol such as methyl alcohol, ethyl alcohol, and isopropyl alcohol, and a ketone such as acetone and methyl ethyl ketone. It is preferable to use methyl ethyl ketone taking into account the stability and the viscosity of the slurry and the sheet drying rate when forming a sheet by a doctor blade method, for example.

A surfactant is used as the dispersant which is added to stabilize the slurry in which the graphite powder is dispersed. A nonionic surfactant, a cationic surfactant, or an anionic surfactant may be used as the dispersant. Examples of the non-ionic surfactant include an aromatic ether surfactant, a carboxylate surfactant, an acrylate surfactant, a surfactant phosphate, a sulphonate surfactant, a fatty acid ester surfactant, a urethane surfactant, a fluorine-containing surfactant, an aminoamide surfactant, an acrylamide surfactant, and the like. Examples of the cationic surfactant include an ammonium surfactant, a sulfonium surfactant, a phosphonium-containing surfactant, and the like. Examples of the anionic surfactant include a carboxylic acid surfactant, a phosphoric acid surfactant, a sulfonic acid surfactant, a hydroxyfatty acid surfactant, a fatty acid amide surfactant, and the like.

The dispersant is added in such an amount that the slurry in which the graphite powder is dispersed is stabilized. Specifically, the dispersant is added in an amount of 0.1 to 10 parts by weight, preferably 0.2 to 5 parts by weight, and more preferably 0.5 to 1.5 parts by weight based on 100 parts by weight of the graphite powder. If the amount of the dispersant is less than 0.1 parts by weight, the dispersibility of the graphite powder decreases when preparing the slurry. If the amount of the dispersant is more than 10 parts by weight, the properties of the thermosetting resin deteriorate.

The slurry prepared by mixing 100 parts by weight of the graphite powder, 10 to 35 parts by weight of the thermosetting resin, 75 to 200 parts by weight of the dispersion medium, and 0.1 to 10 parts by weight of the dispersant is poured into a mold with a desired shape, and is then dried to volatilize the dispersion medium and a volatile component. The dried product is thermocompression-molded at a pressure and a temperature suitable for the resin used to produce a sheet-shaped molded product. For example, when using a phenol resin as the thermosetting resin, the dried product is thermocompression-molded at a pressure of 10 to 100 MPa and a temperature of 150 to 250°C to produce a separator material for polymer electrolyte fuel cells.

Another process of producing a separator material for polymer electrolyte fuel cells according to the present invention includes applying the slurry to a substrate sheet, drying the slurry to volatilize the dispersion medium and a volatile component, removing the substrate sheet to obtain a green sheet, stacking a plurality of the green sheets in a mold, and thermocompression-molding the green sheets in the shape of a sheet at an appropriate pressure and temperature to produce a separator material for polymer electrolyte fuel cells.

### EXAMPLES

The present invention is described in detail below by way of examples and comparative examples. Not that the following examples illustrate one embodiment of the present invention, and should not be construed as limiting the present invention.

### Examples 1 and 2 and Comparative Examples 1 to 9

An artificial graphite powder having a different average particle diameter A and a natural graphite powder having a different average particle diameter B were mixed in a different weight ratio to prepare a graphite powder. A phenol novolak epoxy resin was used as a thermosetting resin. The epoxy resin was dissolved in methyl ethyl ketone (dispersion medium) at a different resin concentration. After the addition of the graphite powder and a dispersant (special polycarboxylic acid polymer surfactant; 1 part by weight based on the graphite powder) to the solution, the components were sufficiently mixed to prepare a slurry.

The slurry was poured into a mold. After volatilizing a volatile component, the slurry was thermocompression-molded at a temperature of 170°C and a pressure of 15 MPa for five minutes, and was then cooled to 40°C under pressure. A sheet-shaped molded product (length: 210 mm, width: 210 mm, thickness: 0.3 mm) was thus produced.

### Example 3

A slurry having the same composition as that of Example 1 was applied to a polyester resin film substrate using a doctor blade, and was then dried to prepare a green sheet. The green sheet was removed from the film substrate. Three green sheets thus obtained were stacked, thermocompression-molded at a temperature of 170°C and a pressure of 15 MPa for five minutes, and then cooled to 40°C under pressure. A sheet-shaped molded product (length: 210 mm, width: 210 mm, thickness: 0.3 mm) was thus produced. Table 1 shows the production conditions for the examples and the comparative examples.

**TABLE 1**

| | Artificial graphite powder | | Natural graphite powder | | Graphite powder | Thermosetting resin |
|---|---|---|---|---|---|---|
| | Average particle diameter A (µm) | Weight ratio | Average particle diameter B (µm) | Weight ratio | *1 Parts by weight | Parts by weight |
| Example 1 | 5 | 80 | 50 | 20 | 100 | 25 |
| Example 2 | 5 | 60 | 50 | 40 | 100 | 25 |
| Example 3 | 5 | 80 | 50 | 20 | 100 | 25 |
| Comparative Example 1 | | | | | | |
| Comparative Example 2 | 5 | 60 | 8 | 40 | 100 | 25 |
| Comparative Example 3 | 5 | 60 | 105 | 40 | 100 | 25 |
| Comparative Example 4 | 5 | 90 | 50 | 10 | 100 | 25 |
| Comparative Example 5 | 5 | 50 | 50 | 50 | 100 | 25 |
| Comparative Example 6^{*2} | 16 | 60 | 80 | 40 | 100 | 25 |
| | 5 | 60 | - | - | 100 | 25 |
| | 50 | 40 | - | - | - | - |
| Comparative Example 7^{*3} | - | - | 5 | 60 | 100 | 25 |
| | - | - | 50 | 40 | - | |
| | 5 | 60 | 50 | 40 | 100 | 36 |
| Comparative Example 8 | 5 | 60 | 50 | 40 | 100 | 9 |
| Comparative Example 9 | | | | | | |

| | | | | | | |
|---|---|---|---|---|---|---|
| Note: *1 Mixed powder of artificial graphite powder and natural graphite powder *2 Only the artificial graphite powder having a different average particle diameter A was used without using a natural graphite powder. *3 Only the natural graphite powder having a different average particle diameter B was used without using an artificial graphite powder. | | | | | | |

A test piece was cut from the sheet-shaped molded product, and the properties of the test piece were evaluated by the following methods. The measurement results are shown in Table 2.

### (1) Electrical resistivity (Ωcm)

The electrical resistivity was measured in accordance with a voltage drop method defined in JIS R7202, "Testing methods for artificial graphite electrode".

### (2) Bulk specific gravity

The bulk specific gravity was measured by the Archimedes method.

### (3) Flexural strength (MPa)

The flexural strength was measured in accordance with JIS K6911.

### (4) Gas impermeability pass rate

The amount of helium gas which permeated the test piece per unit time and unit cross-sectional area when applying a differential pressure of 0.2 MPa using helium gas was measured. A case where the test piece had a gas permeability of 10⁻⁶ cm³/cm²·min or less was determined to be good. The pass rate for 100 molded products is shown in Table 2.

**TABLE 2**

| | Electrical resistivity (Ωcm) | | | Bulk specific gravity | Flexural strength | Gas impermeability |
|---|---|---|---|---|---|---|
| | Thickness direction (Z) | Plane direction (X-Y) | Anisotropy ratio | | (MPa) | Pass rate (%) |
| Example 1 | 0.012 | 0.008 | 1.5 | 1.83 | 73 | 100 |
| Example 2 | 0.010 | 0.008 | 1.3 | 1.86 | 73 | 100 |
| Example 3 | 0.013 | 0.007 | 1.9 | 1.83 | 77 | 100 |
| Comparative Example 1 | 0.045 | 0.020 | 2.3 | 1.89 | 83 | 80 |
| Comparative Example 2 | 0.035 | 0.006 | 5.8 | 1.87 | 65 | 100 |
| Comparative Example 3 | 0.032 | 0.015 | 2.1 | 1.82 | 80 | 30 |
| Comparative Example 4 | 0.030 | 0.014 | 2.1 | 1.88 | 70 | 100 |
| Comparative Example 5 | 0.015 | 0.006 | 2.5 | 1.88 | 67 | 100 |
| Comparative Example 6 | 0.032 | 0.016 | 2.0 | 1.85 | 86 | 80 |
| Comparative Example 7 | 0.040 | 0.014 | 2.9 | 1.88 | 70 | 100 |
| Comparative Example 8 | 0.050 | 0.025 | 2.0 | 1.81 | 80 | 100 |
| Comparative Example 9 | 0.015 | 0.007 | 2.1 | 1.92 | 35 | 10 |

As shown in Tables 1 and 2, as compared with the sheet-shaped molded products of Examples 1 to 3 produced according to the present invention and satisfying the conditions according to the present invention, the sheet-shaped molded products of Comparative Examples 1 and 2 in which the average particle diameter B of the natural graphite powder did not satisfy the relationship "B=Ax(2-20)" with respect to the of average particle diameter A of the artificial graphite powder, the sheet-shaped molded products of Comparative Examples 3 and 4 in which the ratio of the artificial graphite powder and the natural graphite powder did not satisfy the relationship "80:20 to 60:40", the sheet-shaped molded product of Comparative Example 5 in which the average particle diameter A of the artificial graphite powder did not satisfy the condition "1 to 15 µm", the sheet-shaped molded product of Comparative Example 6 in which only the artificial graphite powder was used, and the sheet-shaped molded product of Comparative Example 7 in which only the natural graphite powder was used, had high electrical resistivity in the thickness direction and showed a high electrical resistivity anisotropy ratio.

The sheet-shaped molded products of Comparative Examples 1, 3, and 6 had poor gas impermeability. The sheet-shaped molded product of Comparative Example 8 in which the amount of the thermosetting resin exceeded 35 parts by weight had high electrical resistivity in the thickness direction and the plane direction. The sheet-shaped molded product of Comparative Example 9 in which the amount of the thermosetting resin was less than 10 parts by weight had poor strength and gas impermeability.

## Claims

1. A process of producing a separator material for polymer electrolyte fuel cells comprising mixing 100 parts by weight of a graphite powder prepared by mixing an artificial graphite powder having an average particle diameter A of 1 to 15 µm and a natural graphite powder having an average particle diameter B of A×(2 to 20) µm in a weight ratio of 80:20 to 60:40, 10 to 35 parts by weight of a thermosetting resin, 75 to 200 parts by weight of a dispersion medium, and 0.1 to 10 parts by weight of a dispersant to prepare a slurry, pouring the slurry into a mold, drying the slurry, thermocompression-molding the dried product in the shape of a sheet, and curing the molded product by heating.

2. A process of producing a separator material for polymer electrolyte fuel cells comprising mixing 100 parts by weight of a graphite powder prepared by mixing an artificial graphite powder having an average particle diameter A of 1 to 15 µm and a natural graphite powder having an average particle diameter B of Ax(2 to 20) µm in a weight ratio of 80:20 to 60:40, 10 to 35 parts by weight of a thermosetting resin, 75 to 200 parts by weight of a dispersion medium, and 0.1 to 10 parts by weight of a dispersant to prepare a slurry, applying the slurry to a substrate sheet, drying the slurry, removing the substrate sheet to obtain a green sheet, stacking a plurality of the green sheets in a mold, thermocompression-molding the green sheets in the shape of a sheet, and curing the molded product by heating.

## Patentansprüche

1. Verfahren zur Herstellung eines Separator-Materials für Polymerelektrolyt-Brennstoffzellen, umfassend das Mischen von 100 Gewichtsteilen eines Graphitpulvers, das durch Mischen eines künstlichen Graphitpulvers mit einem mittleren Teilchendurchmesser A von 1 bis 15 µm und eines natürlichen Graphitpulvers mit einem mittleren Teilchendurchmesser B von Ax(2 bis 20) µm in einem Gewichtsverhältnis von 80:20 bis 60:40 hergestellt wurde, 10 bis 35 Gewichtsteilen eines wärmehärtbaren Harzes, 75 bis 200 Gewichtsteilen eines Dispersionsmediums und 0,1 bis 10 Gewichtsteilen eines Dispergiermittels, um eine Aufschlämmung herzustellen, Gießen der Aufschlämmung in eine Form, Trocknen der Aufschlämmung, Thermokompressionsformen des getrockneten Produkts in der Form einer Folie und Härten des Formproduktes durch Erwärmen.

2. Verfahren zur Herstellung eines Separator-Materials für Polymerelektrolyt-Brennstoffzellen, umfassend das Mischen von 100 Gewichtsteilen eines Graphitpulvers, das durch Mischen eines künstlichen Graphitpulvers mit einem mittleren Teilchendurchmesser A von 1 bis 15 µm und eines natürlichen Graphitpulvers mit einem mittleren Teilchendurchmesser B von A×(2 bis 20) µm in einem Gewichtsverhältnis von 80:20 bis 60:40 hergestellt wurde, 10 bis 35 Gewichtsteilen eines wärmehärtbaren Harzes, 75 bis 200 Gewichtsteilen eines Dispersionsmediums und 0,1 bis 10 Gewichtsteilen eines Dispergiermittels, um eine Aufschlämmung herzustellen, Aufbringen der Aufschlämmung auf eine Substratfolie, Trocknen der Aufschlämmung, Entfernen der Substratfolie, um eine Grünfolie zu erhalten, Stapeln einer Mehrzahl der Grünfolien in einer Form, Thermokompressionsformen der Grünfolien in der Form einer Folie und Härten des Formproduktes durch Erwärmen.

## Revendications

1. Procédé de production d'un matériau séparateur pour piles à combustible à électrolyte polymère comprenant les étapes consistant à mélanger 100 parties en poids d'une poudre de graphite préparée en mélangeant une poudre de graphite artificielle ayant un diamètre moyen des particules A de 1 à 15 µm et une poudre de graphite naturelle ayant un diamètre moyen des particules B de A x (2 à 20) µm selon un rapport en poids de 80:20 à 60:40, 10 à 35 parties en poids d'une résine thermodurcissable, 75 à 200 parties en poids d'un milieu de dispersion, et 0,1 à 10 parties en poids d'un dispersant pour préparer une suspension, verser la suspension dans le moule, sécher la suspension, mouler par thermocompression le produit séché sous la forme d'une feuille, et réticuler le produit moulé par chauffage.

2. Procédé de production d'un matériau séparateur pour piles à combustible à électrolyte polymère comprenant les étapes consistant à mélanger 100 parties en poids d'une poudre de graphite préparée en mélangeant une poudre de graphite artificielle ayant un diamètre moyen des particules A de 1 à 15 µm et une poudre de graphite naturelle ayant un diamètre moyen des particules B de A x (2 à 20) µm selon un rapport en poids de 80:20 à 60:40, 10 à 35 parties en poids d'une résine thermodurcissable, 75 à 200 parties en poids d'un milieu de dispersion, et 0,1 à 10 parties en poids d'un dispersant pour préparer une suspension, appliquer la suspension sur une feuille de support, sécher la suspension, enlever la feuille de support pour obtenir une feuille verte, empiler une pluralité des feuilles vertes dans un moule, mouler par thermocompression les feuilles vertes sous la forme d'une feuille, et réticuler le produit moulé par chauffage.
